# FASCICULE DE BREVET EUROPEEN

(11) **EP 3 003 761 B1**
(45) Date de publication et mention de la délivrance du brevet: **19.04.2017**
(21) Numéro de dépôt: 14733254.8
(22) Date de dépôt: 04.06.2014
(51) Int. Cl.: B60K 11/08, B60K 11/04, F01P 1/06, F01P 11/10

(54) **GUIDE D'AIR À ÉCRASEMENT TÉLESCOPIQUE POUR RADIATEUR DE MOTEUR DE VÉHICULE AUTOMOBILE ET VÉHICULE AINSI ÉQUIPÉ**
TELESKOPISCH DEFORMIERBARE LUFTFÜHRUNG FÜR EINEN MOTORKÜHLER EINES KRAFTFAHRZEUGS UND DAMIT AUSGESTATTETES FAHRZEUG
TELESCOPICALLY DEFORMABLE AIR GUIDE FOR A MOTOR RADIATOR OF A MOTOR VEHICLE AND ACCORDINGLY EQUIPPED VEHICLE

(30) Priorité: 06.06.2013 FR 1355227
(43) Date de publication de la demande: 13.04.2016
(73) Titulaire: Renault, 92100 Boulogne Billancourt (FR)
(72) Inventeur: BUI, Joseph, 78130 Les Mureaux (FR)
(86) Numéro de dépôt international: PCT/FR2014/051327
(87) Numéro de publication internationale: WO 2014/195636

(56) Documents cités:
- EP-A1- 1 216 872
- FR-A1- 2 965 226
- FR-A1- 2 967 375

## Description

La présente invention concerne un guide d'air placé au niveau de la face avant technique de moteur de véhicule automobile. Il s'agit de canaliser l'air pénétrant par au moins une ouverture ou grille d'aération dans la façade avant ou peau de bouclier avant du véhicule pour le conduire à un système de refroidissement constitué d'un ensemble d'éléments regroupés dans ce qu'on appelle une « valise de refroidissement ». Par ce terme, on désigne l'ensemble des éléments nécessaires au refroidissement du moteur, parfois empilés en couches ou en partie superposés ; la valise de refroidissement se compose classiquement du radiateur à eau de refroidissement moteur, du RAS optionnel (« refroidisseur air de suralimentation » utilisé pour un radiateur turbo) et du condenseur. Ce système de refroidissement est généralement situé au niveau de ce qu'on appelle dans le métier « face avant technique » (FAT), à savoir une structure qui se trouve en avant du bloc moteur et qui a pour fonction de supporter différents organes, principalement le radiateur du bloc moteur. La FAT peut prendre de multiples formes. Dans certains cas, elle se réduit à une ou deux traverses, inférieure et/ou supérieure. Dans d'autres cas, elle constitue un châssis de forme plus ou moins complexe intégrant la valise de refroidissement.

On connaît par le document FR 2967375, qui sert de base pour la présentation en deux parties de la revendication 1, un guide d'air destiné à être disposé devant un système de refroidissement prévu dans un compartiment moteur d'un véhicule, et derrière au moins une grille d'aération d'une façade avant du véhicule, le guide d'air étant sous forme d'une structure cadre sensiblement rectangulaire chevauchant la poutre transversale de choc disposée à cet endroit du compartiment moteur, et à l'avant de cette structure-cadre, au moins un convergent attaché à ladite structure-cadre. La structure-cadre est avantageusement une partie commune à toute une gamme de modèles ayant une même architecture de moteur, alors que le convergent est une pièce spécifique au modèle considéré, destinée à s'adapter parfaitement à l'environnement du moteur.

Une telle construction doit être prévue pour supporter certains types de choc sans entraîner des réparations trop onéreuses. En particulier, le choc RCAR est un protocole de choc imposé par les compagnies d'assurance. Il consiste en un choc frontal sur un côté du véhicule uniquement (côté gauche en France, à droite dans les pays à conduite à droite). Une demi- barrière verticale ayant une inclinaison de 10° par rapport au plan transversal est projetée contre la face avant du véhicule à une vitesse de 16 km/h. Le minimum de dégâts doit être généré à l'occasion d'un tel choc pour minimiser les coûts de réparation. Ceci s'applique notamment à la face avant technique du véhicule qui intègre le radiateur (condenseur) du véhicule.

Dans des solutions connues, des tiges de fixation assurant la fixation de la face avant technique à la structure (longerons, berceau) étaient susceptibles de se rompre lors du choc, impliquant un recul de la FAT et du radiateur, sans dégradation de ces derniers. Seules les tiges de fixation étaient à remplacer lors de la réparation. Dans ces dispositifs connus, les guides d'air interposés entre la grille d'entrée d'air et le radiateur étaient relativement rigides, contribuant à transmettre les efforts vers l'arrière sur la FAT et à la déplacer.

Le document FR 2965226 décrit un guide d'air avec un caisson supérieur et un caisson inférieur, le caisson inférieur comportant au moins une paroi inférieure horizontale et deux parois latérales verticales. Un absorbeur de choc s'étend le long la partie arrière de la paroi inférieure.

Ces solutions exigent de maintenir libre un espace de dégagement à l'arrière de la FAT. Or la multiplicité des organes qui doivent être logés dans le compartiment moteur rend cette solution pénalisante et l'on souhaite trouver une solution alternative qui permette, même en l'absence d'espace de dégagement à l'arrière, de satisfaire aux conditions du test de choc RCAR. Tel est le but de l'invention.

L'invention atteint son but grâce à un guide d'air destiné à collecter l'air depuis une grille située à l'avant d'un compartiment moteur de véhicule vers un radiateur vertical situé dans le compartiment moteur et fixé à un châssis de véhicule, le guide d'air étant sous forme d'un caisson principal comportant un caisson supérieur et un caisson inférieur comportant chacun une ouverture vers l'avant destinée à recevoir l'air, le caisson principal comportant des moyens de fixation au radiateur vertical, le caisson inférieur comportant au moins une paroi inférieure sensiblement horizontale et deux parois latérales sensiblement verticales, caractérisé en ce que le caisson inférieur comporte des moyens de butée axiale et transversale de la partie arrière du caisson inférieur du guide d'air par rapport au châssis du véhicule, au moins dans une région latérale du caisson inférieur, et d'autre part une structure locale de compression préférentielle contrôlée des parois du caisson inférieur, au moins dans une partie inférieure de ladite région latérale du caisson inférieur.

De préférence, pour réaliser les moyens de butée axiale et transversale de la partie arrière du caisson inférieur du guide d'air par rapport au châssis du véhicule, le caisson inférieur comporte latéralement à l'arrière un pion longitudinal d'indexage et d'ancrage adapté à s'engager dans un orifice vertical transversal formé dans une pièce liée solidement au châssis du véhicule.

De préférence, la structure locale de compression préférentielle contrôlée des parois du caisson inférieur est réalisée par le fait que au moins une partie d'au moins l'une des parois inférieure et/ou latérale du caisson inférieur comporte une structure à écrasement télescopique desdites parois sous une poussée longitudinale dépassant un certain seuil.

Ainsi, en cas de choc d'une certaine intensité, la poussée transmise par le guide d'air depuis la carrosserie du véhicule place le caisson inférieur en butée contre un élément résistant du châssis et donc empêche son déplacement axial au-delà de cette butée, et en bloque aussi les éventuels débattements latéraux, tout ceci grâce au pion d'indexage et d'ancrage. Ne pouvant reculer, le guide d'air s'écrase dans les zones structurelles à écrasement télescopique, c'est-à-dire dans des zones où la géométrie et l'épaisseur des parois sont choisies pour conduire à un écrasement sous forme d'emboîtement de diverses sections de parois les unes dans les autres. Ainsi selon l'invention, le guide d'air a été rendu à la fois fusible et de position fixée en cas de choc, aussi bien axialement que transversalement, au moins dans la zone du caisson inférieur, c'est-à-dire, en pratique, dans la zone située au dessous de la poutre de choc, zone qui reçoit la poussée en cas de choc RCAR.

Pour réaliser l'écrasement localisé et maîtrisé, la paroi du caisson inférieur, dans les zones concernées par la structure écrasable, est avantageusement formée de plusieurs sections de paroi relativement rigide décalées transversalement et reliées par des parois ou membranes relativement souples et/ou fragiles, par exemple des parois amincies, formant un angle droit ou un angle aigu par rapport à la paroi principale des différentes sections. Cette disposition permet aux sections de se déplacer longitudinalement les unes par rapport aux autres pour s'emboîter, par déformation voire rupture des parois souples de liaison. Cet emboîtement permet d'absorber l'énergie du choc et se fait d'une manière localisée et contrôlée, qui permet ensuite la réparation par changement du guide d'air.

Les exigences du test de choc RCAR imposent une réparabilité d'un côté uniquement du véhicule (le côté du conducteur). On peut donc ne prévoir l'agencement de l'invention, à savoir le blocage sur châssis par pion et la structure de paroi de caisson écrasable, uniquement d'un côté du guide d'air. Si l'architecture du véhicule le permet, on peut aussi la prévoir des deux côtés, ce qui la rend compatible avec tous les types de conduites (à gauche ou à droite).

Le pion longitudinal d'indexage et d'ancrage adapté à s'engager dans un orifice vertical transversal formé dans une pièce liée solidement au châssis du véhicule permet à la fois de former une butée axiale pour le guide d'air et de constituer un système centreur qui s'oppose à l'éclatement du guide d'air sous la poussée. Selon l'invention, ce pion peut être déjà en place dans son orifice lié au châssis dès le montage, mais il peut aussi, selon une caractéristique originale de l'invention, être monté à distance de l'orifice, longitudinalement en avant de celui-ci, et n'être introduit dans l'orifice de centrage que lors du choc, sous l'effet de la poussée s'exerçant sur le guide d'air. Cette solution peut être avantageuse en fonction de l'architecture du compartiment moteur.

L'invention concerne aussi un véhicule comprenant un châssis et un compartiment moteur dans lequel est situé un radiateur vertical fixé audit châssis de véhicule, à l'avant duquel est placé un guide d'air destiné à collecter l'air depuis une grille située à l'avant d'un compartiment moteur de véhicule vers le radiateur, caractérisé en ce que le guide d'air est conforme à ce qui vient d'être décrit. Comme mentionné précédemment, ce véhicule peut être tel que pion du guide d'air est, lors du montage, situé au moins partiellement en dehors de l'orifice vertical transversal lié au châssis du véhicule. Il ne vient se loger et se bloquer dans ledit orifice que lors d'un choc.

D'autres caractéristiques et avantages de l'invention ressortiront de la description suivante. Il sera fait référence aux dessins annexés sur lesquels :
La figure 1 est une vue en perspective de trois-quarts avant de la partie avant d'un compartiment moteur de véhicule automobile, avec ses éléments structurels et son radiateur, et un guide d'air auquel l'invention s'applique.
La figure 2 est une vue en perspective de trois-quarts arrière de la partie avant de compartiment moteur de la figure 1, montrant l'arrière du radiateur et du guide d'air auquel l'invention s'applique.
La figure 3 représente en perspective de trois-quarts et de dessous un détail agrandi du caisson inférieur du guide d'air de l'invention dans l'environnement de la figure 1.
Les figures 4 et 5 sont des vues de détail en perspective de l'avant et de l'arrière du pion de butée et de fixation en choc présent sur le caisson inférieur de la figure 3.
La figure 6 est une en perspective arrière de guide d'air de l'invention.
Les figures 7 et 8 sont des vues schématiques montrant la constitution des zones frangibles formées dans les parois du caisson inférieur du guide d'air de la figure 6.

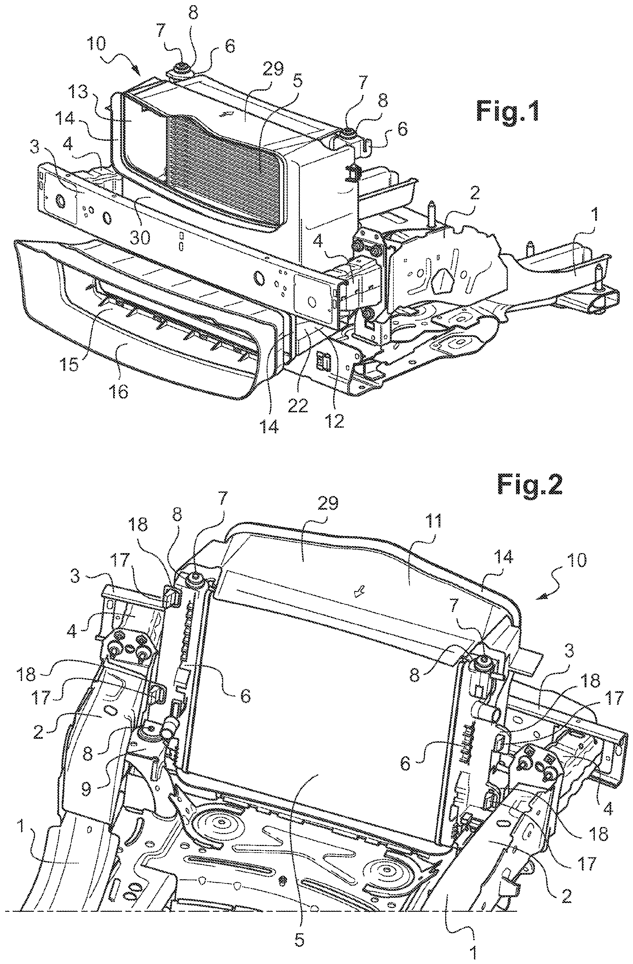

Les figures 1 et 2 montrent la partie avant de la structure de châssis d'un véhicule, formée de deux longerons 1 remontant vers le haut à leur avant 2, et réunis à l'avant en sens transversal par la traverse d'extrémité ou poutre de choc 3, fixée par l'intermédiaire de supports 4. On n'a pas représenté sur le dessin l'ensemble des pièces structurelles pour ne pas l'encombrer, en particulier les traverses inférieure et supérieure reliée aux longerons qui supportent ou qui s'intègrent à la façade technique avant (FAT) comprenant la valise de refroidissement et notamment le radiateur vertical 5, 6. Celui-ci est formé de son échangeur transversal vertical 5 encadré par ses deux boîtes à eau latérales verticales 6. Le radiateur 5, 6 est fixé au châssis par quatre tiges respectivement 7, deux supérieures, seules visibles sur les figures 1, 2, et deux inférieures, qui coopèrent avec la structure de châssis par l'intermédiaire de plots élastique 8 en caoutchouc ou en élastomère. Les tiges supérieures 7 coopèrent avec la traverse supérieure non représentée, tandis que les tiges inférieures s'enfoncent dans des orifices d'une partie 9 du berceau porté par les longerons 1.

À l'avant du radiateur 5, 6, un guide d'air 10 est formé d'un caisson principal totalement ouvert vers l'ouvert et délimité par un cadre sensiblement rectangulaire formé de deux parois latérales 22, d'une paroi inférieure 21 et d'une paroi supérieure 29. Ce cadre délimite, grâce à une paroi avant médiane horizontale 30 destinée à venir juste derrière la traverse d'extrémité 3, un caisson supérieur 11 et un caisson inférieur 12 respectivement au-dessus et en dessous de la traverse 3. Chaque caisson 11, 12 comporte à l'avant une large ouverture rectangulaire 13 bordée par une lèvre d'étanchéité 14 destinée à permettre le montage étanche à l'air de convergents avant respectifs 15. Ces lèvres peuvent être du type connu en soi adapté à s'appliquer contre une surface antagoniste sous l'effet de la pression de l'air reçu dans le guide d'air et donc à renforcer l'étanchéité du simple fait de la pression interne de l'air. On a représenté sur le dessin seulement un convergent, le convergent inférieur 15, à l'état non monté dans le caisson inférieur 12. Il est lui-même bordé à l'avant d'une large zone souple 16 d'adaptation au bouclier avant du véhicule non représenté (cf. document FR 2967375). Le ou les convergents 15 viennent s'appliquer derrière une ou plusieurs grilles prévues dans le bouclier, à l'avant du véhicule, de manière à collecter l'air et à le conduire au radiateur par l'intermédiaire du caisson du guide d'air. La zone souple 16 permet non seulement l'adaptation morphologique du convergent 15 au bouclier mais est capable d'absorber l'énergie des très petits chocs.

Les caissons supérieur 11 et inférieur 12 peuvent être contigus et communicants comme représenté sur la figure 1. Ils peuvent avoir une face avant commune entièrement située derrière la traverse 3, également comme représenté sur la figure 1. Mais les caissons 11, 12 pourraient aussi bien chevaucher la traverse 3, être non communicants ou ne communiquer qu'à leur partie arrière.

Le cadre du guide 10 forme une pièce rigide sensiblement rectangulaire et d'une certaine épaisseur, par exemple réalisée en plastique moulé (par exemple en polypropylène), avec éventuellement des renforcements ponctuels en plastique ou métalliques.

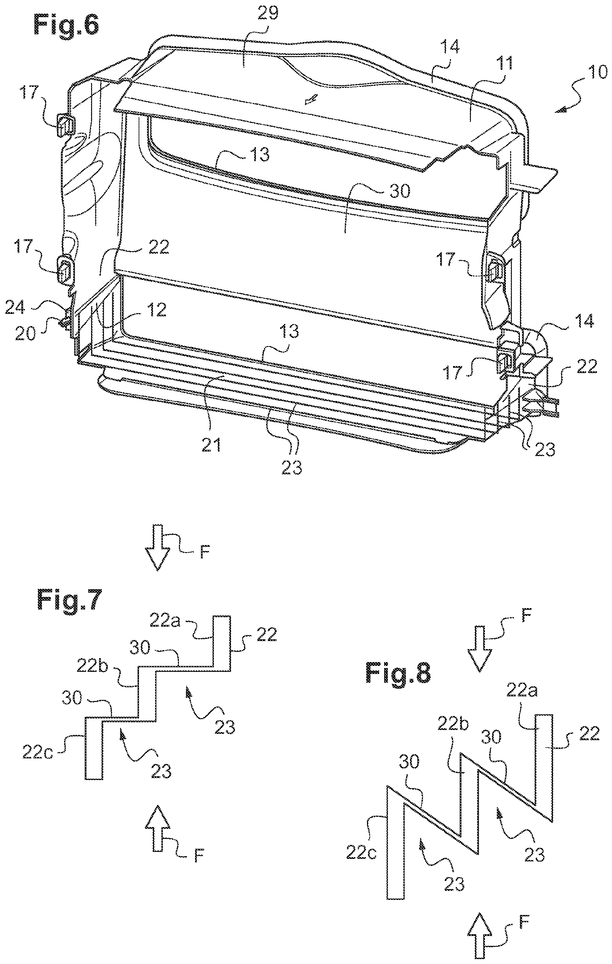

Le guide d'air 10 est fixé sur le radiateur 5, 6 par des ergots élastiques 17 (cf. figures 2 et 6) qui viennent s'encliqueter dans des ouvertures rectangulaires prévues sur des parties latérales 18 des boîtes à eau 6 du radiateur 5,6.

L'ensemble de ces dispositions est connu. Dans les constructions connues de ce type, les tiges 7 supérieures et inférieures de fixation du radiateur sur le châssis sont frangibles. En cas de choc d'une certaine importance, et notamment de choc RCAR, les efforts sont transmis depuis l'avant du guide d'air sur le radiateur puis de celui-ci sur les tiges 7 qui, fragiles, se rompent, ce qui permet au radiateur de reculer en bloc sans être, en général, abîmé par le choc lui-même. Il suffit de changer les tiges 7 et de remettre en place le radiateur avec de nouvelles tiges pour réparer les dégâts liés au choc. Cependant, ce recul du radiateur 5, 6 n'est possible que s'il y a de l'espace disponible en arrière du radiateur.

L'invention vise à donner une solution pour le cas où l'encombrement du compartiment moteur est tel qu'il n'y a pas de place disponible à l'arrière du radiateur, et donc où le recul n'est pas possible. Il faut donc trouver une solution permettant l'absorption du choc sans endommager le radiateur.

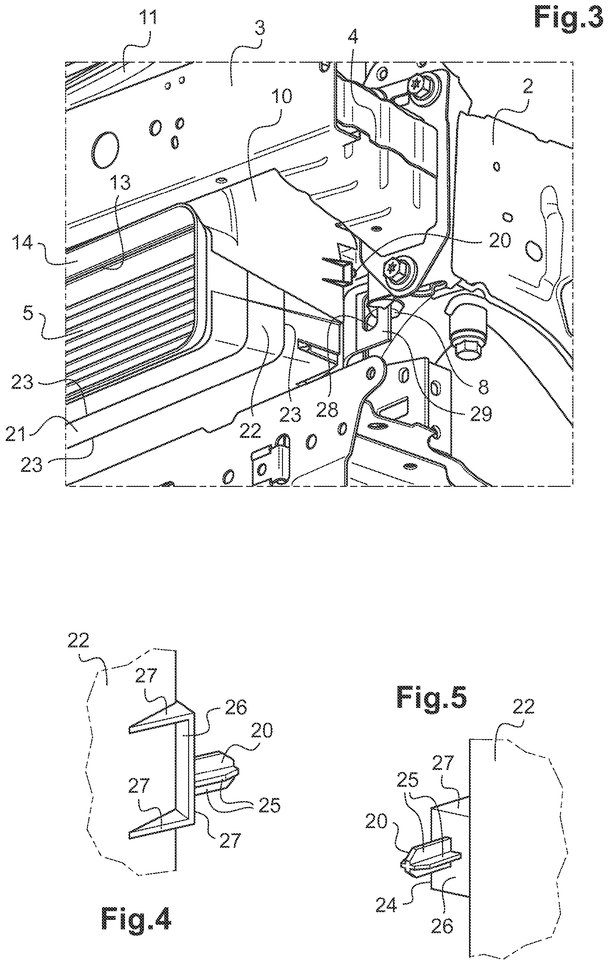

À cet effet, le guide d'air 10 de l'invention est conçu de manière à être compressible d'une manière choisie et maîtrisée, au moins dans sa partie inférieure latérale concernée par un choc RCAR. À cet effet, le caisson principal, et plus précisément le caisson inférieur 12 du guide d'air 10 comporte d'une part à l'arrière un pion 20 d'indexage et d'ancrage du caisson sur le châssis du véhicule, et d'autre part au moins une paroi à repliement télescopique frangible. On entend par repliement télescopique frangible une structure permettant l'écrasement par emboîtement des parois ou plus exactement de tronçons/sections de parois. Ces caractéristiques sont détaillées sur les figures 3 à 8.

On reconnaît sur la figure 3 la partie latérale de la traverse d'extrémité 3, attachée par un support 4 à l'extrémité 2 de longeron, et on voit le caisson inférieur 12, dont l'ouverture avant 13 bordée de la lèvre 14, laisse voir l'échangeur 5 du radiateur. La paroi inférieure horizontale 21 et la partie inférieure de la paroi latérale 22 du caisson inférieur 12 comporte des plis 23 de télescopage frangible ou plis de striction en accordéon qui seront détaillés plus loin.

Par ailleurs, la paroi latérale verticale 22 comporte un support 24 destiné au pion horizontal précité 20. Ce pion 20, disposé dans le sens longitudinal du véhicule, est formé par exemple par quatre arêtes 25 biseautées à l'extrémité et disposées à 90° les unes des autres, qui font saillie à l'arrière de la surface verticale transversale 26 du support 24, soudée avec des goussets d'appui 27 sur la paroi 22.

Le pion 20 est destiné à s'introduire, au moins en cas de choc, mais éventuellement aussi çà l'état normal, avant choc, dans une ouverture 28 formée dans une plaque 29 solidement fixée à une partie du châssis. La position du pion 20 au bas du caisson principal, au niveau du caisson inférieur 12 juste au-dessous de la poutre de choc 3, est sensiblement au centre de la poussée observée dans un choc RCAR.

L'ouverture 28 a une taille supérieure à celle du pion 20 de façon à permettre son guidage et son introduction en cas de choc. On peut prévoir une ouverture plus large que le pion 20 pour laisser la possibilité d'un débattement latéral limité ; c'est particulièrement opportun si le pion 20 est monté de manière à être en dehors de l'orifice 28 et à n'y entrer qu'en cas de choc. Grâce à cette ouverture 28, le pion 20 indexe par rapport au châssis, au moins en cas de choc, la position du caisson inférieur 12 dans cette région. Elle donne une butée axiale au mouvement possible du caisson inférieur 12 sous le choc, et elle limite aussi son débattement latéral ou vertical, et ce en référence au châssis et non plus au radiateur 5, 6, de sorte que le radiateur 5, 6 peut rester en place malgré le choc, les efforts de poussée étant finalement repris et bloqués par la butée axiale sur le châssis et ne passant plus par le radiateur 5, 6.

La figure 6 montre de l'arrière le guide d'air 10, formé de ses deux caissons supérieur et inférieur 11 et 12 solidaires l'un de l'autre par leur face avant munie des ouvertures 13 et par leur parois latérales 22. On a représenté sur la figure 6 les attaches 17 du guide d'air 10 au radiateur. Par ailleurs, on a représenté d'un côté du guide d'air 10 le pion 20 et son support 24. On a représenté ici un seul pion 20 d'un seul côté, mais on peut prévoir un pion 20 de chaque côté du guide d'air 10 pour équiper au choix une voiture à conduite à gauche ou à conduite à droite. La figure 6 montre également les plis ou gradins 23 de télescopage par articulation ou par rupture, formés dans tout ou partie des parois latérale 22 (au moins au niveau du bas du caisson inférieur 12) et inférieure 21.

Deux exemples de réalisation de ces plis ou gradins 23 sont illustrés sur les figures 7 et 8 qui montrent la paroi 22 (par exemple) réalisée en trois sections 22a, 22b, 22c qui peuvent s'emboîter les unes dans les autres. Ces sections 22a, 22b, 22c sont réunies par des parois ou membranes 30 plus fines que la paroi 22 et donc plus souples et/ou plus fragiles. La paroi 22 a par exemple une épaisseur de 2 mm tandis que les membranes ont entre 0,5 mm et 1,5 mm. Les membranes 30 peuvent former des gradins droits comme illustré dans la figure 7, ou un angle aigu avec la paroi 22 comme illustré dans la figure 8. Les membranes 30 peuvent jouer, selon leur emplacement et leur constitution, comme des articulations ou comme des liaisons fusibles entre les différentes sections de paroi 22. Sous l'effet d'une poussée F dû à un choc RCAR, le cisaillement va faire se plier, voire se rompre, les membranes souples ou frangibles intermédiaires 30 de sorte que les sections 22a, 22b, 22c vont pouvoir s'emboîter télescopiquement les unes dans les autres. La section 22a située du côté arrière du véhicule est sensiblement immobile puisqu'elle est bloquée sur le châssis grâce au pion 20. Les sections situées plus en avant 22b et 22c s'emboîtent dans la section 22a, soit intérieurement (la section 22a est la plus large et 22c la plus petite), soit extérieurement (la section 22a est la plus petite et 22c la plus large).

## Revendications

1. Guide d'air (10) destiné à collecter l'air depuis une grille située à l'avant d'un compartiment moteur de véhicule vers un radiateur vertical (5, 6) situé dans le compartiment moteur et fixé à un châssis de véhicule, le guide d'air (10) étant sous forme d'un caisson principal comportant un caisson supérieur (11) et un caisson inférieur (12) comportant chacun une ouverture (13) vers l'avant destinée à recevoir l'air, le caisson principal comportant des moyens (17) de fixation au radiateur vertical (5, 6), le caisson inférieur (12) comportant au moins une paroi inférieure sensiblement horizontale (21) et deux parois latérales sensiblement verticales (22), **caractérisé en ce que** le caisson inférieur (12) comporte des moyens (20) de butée axiale et transversale de la partie arrière du caisson inférieur (12) du guide d'air par rapport au châssis du véhicule, au moins dans une région latérale du caisson inférieur (12), et d'autre part une structure locale (21, 22, 23) de compression préférentielle contrôlée des parois (21, 22) du caisson inférieur (12), au moins dans une partie inférieure de ladite région latérale du caisson inférieur (12).

2. Guide d'air (10) selon la revendication 1, **caractérisé en ce que**, pour réaliser lesdits moyens de butée axiale et transversale de la partie arrière du caisson inférieur du guide d'air par rapport au châssis du véhicule, le caisson inférieur comporte latéralement à l'arrière un pion (20) longitudinal d'indexage et d'ancrage adapté à s'engager dans un orifice vertical transversal (28) formé dans une pièce (29) liée solidement au châssis du véhicule.

3. Guide d'air (10) selon l'une quelconque des revendications 1 ou 2, **caractérisé en ce que** la structure locale de compression préférentielle contrôlée des parois du caisson inférieur (12) est réalisée par le fait que au moins une partie d'au moins l'une des parois inférieure (21) et/ou latérale (22) du caisson inférieur (12) comporte une structure (21, 22, 23) à écrasement télescopique desdites parois sous une poussée longitudinale dépassant un certain seuil.

4. Guide d'air (10) selon la revendication 3, **caractérisé en ce que** la paroi (21, 22) du caisson inférieur (12), dans les zones concernées par la structure écrasable, est formée de plusieurs sections de paroi relativement rigide (22a, 22b, 22c) décalées transversalement et reliées par des parois (30) relativement souple ou fragiles, permettant aux sections de paroi relativement rigide (22a, 22b, 22c) de se déplacer longitudinalement les unes par rapport aux autres pour s'emboîter, par déformation voire rupture des parois de liaison (30).

5. Guide d'air selon la revendication 4, **caractérisé en ce que** les parois de liaison (30) sont des parois amincies formant un angle droit ou un angle aigu par rapport à la paroi principale des différentes sections (22a, 22b, 22c).

6. Guide d'air selon l'une quelconque des revendications 1 à 5, **caractérisé en ce que** les moyens (20) de butée axiale et transversale et la structure locale (21, 22, 23) de compression préférentielle contrôlée des parois (21, 22) du caisson inférieur (12) sont prévus seulement d'un côté du caisson inférieur (12).

7. Guide d'air selon l'une quelconque des revendications 1 à 5, **caractérisé en ce que** les moyens (20) de butée axiale et transversale et la structure locale (21, 22, 23) de compression préférentielle contrôlée des parois (21, 22) du caisson inférieur (12) sont prévus des deux côtés du caisson inférieur (12).

8. Véhicule comprenant un châssis et un compartiment moteur dans lequel est situé un radiateur vertical (5, 6) fixé audit châssis de véhicule, à l'avant duquel est placé un guide d'air (10) destiné à collecter l'air depuis une grille située à l'avant d'un compartiment moteur de véhicule vers le radiateur (5, 6), **caractérisé en ce que** le guide d'air (10) est conforme à l'une des revendications 1 à 7.

9. Véhicule selon la revendication 8, **caractérisé en ce que** le pion (20) du guide d'air (10) est, lors du montage, situé au moins partiellement en dehors de l'orifice vertical transversal (28) lié au châssis du véhicule.

## Patentansprüche

1. Luftleiter (10), der dazu bestimmt ist, die Luft von einem vor einem Fahrzeug-Motorraum befindlichen Gitter zu einem senkrechten Kühler (5, 6) zu sammeln, der sich im Motorraum befindet und an einem Fahrzeug-Fahrgestell befestigt ist, wobei der Luftleiter (10) in Form eines Hauptkastens vorliegt, der einen oberen Kasten (11) und einen unteren Kasten (12) aufweist, die je eine Öffnung (13) nach vorne aufweisen, die dazu bestimmt ist, die Luft zu empfangen, wobei der Hauptkasten Einrichtungen (17) zur Befestigung am senkrechten Kühler (5, 6) aufweist, wobei der untere Kasten (12) mindestens eine im Wesentlichen waagrechte untere Wand (21) und zwei im Wesentlichen senkrechte Seitenwände (22) aufweist, **dadurch gekennzeichnet, dass** der untere Kasten (12) mindestens in einem seitlichen Bereich des unteren Kastens (12) Einrichtungen (20) für den Axial- und Queranschlag des hinteren Teils des unteren Kastens (12) des Luftleiters bezüglich des Fahrgestells des Fahrzeugs und andererseits zumindest in einem unteren Teil des seitlichen Bereichs des unteren Kastens (12) eine lokale Struktur (21, 22, 23) kontrollierter bevorzugter Komprimierung der Wände (21, 22) des unteren Kastens (12) aufweist.

2. Luftleiter (10) nach Anspruch 1, **dadurch gekennzeichnet, dass** zur Herstellung der Einrichtungen für einen Axial- und Queranschlag des hinteren Teils des unteren Kastens des Luftleiters bezüglich des Fahrgestells des Fahrzeugs der untere Kasten seitlich hinten einen länglichen Flachstift (20) zur Indexierung und Verankerung aufweist, der geeignet ist, sich in eine senkrechte Queröffnung (28) einzufügen, die in einem fest mit dem Fahrgestell des Fahrzeugs verbundenen Bauteil (29) ausgebildet ist.

3. Luftleiter (10) nach einem der Ansprüche 1 oder 2, **dadurch gekennzeichnet, dass** die lokale Struktur kontrollierter bevorzugter Komprimierung der Wände des unteren Kastens (12) dadurch hergestellt wird, dass mindestens ein Teil mindestens einer der unteren (21) und/oder Seitenwände (22) des unteren Kastens (12) eine Struktur (21, 22, 23) mit teleskopischem Zusammendrücken der Wände unter einem eine bestimmte Schwelle überschreitenden Längsschub aufweist.

4. Luftleiter (10) nach Anspruch 3, **dadurch gekennzeichnet, dass** die Wand (21, 22) des unteren Kastens (12) in den von der zusammendrückbaren Struktur betroffenen Zonen von mehreren relativ steifen Wandabschnitten (22a, 22b, 22c) gebildet wird, die in Querrichtung versetzt und durch relativ geschmeidige oder zerbrechliche Wände (30) verbunden sind, die es den relativ steifen Wandabschnitten (22a, 22b, 22c) erlauben, sich in Längsrichtung zueinander zu verschieben, um sich durch Verformung oder sogar Brechen der Verbindungswände (30) ineinanderzufügen.

5. Luftleiter nach Anspruch 4, **dadurch gekennzeichnet, dass** die Verbindungswände (30) verdünnte Wände sind, die einen rechten Winkel oder einen spitzen Winkel bezüglich der Hauptwand der verschiedenen Abschnitte (22a, 22b, 22c) bilden.

6. Luftleiter nach einem der Ansprüche 1 bis 5, **dadurch gekennzeichnet, dass** die Einrichtungen (20) für einen Axial- und Queranschlag und die lokale Struktur (21, 22, 23) kontrollierter bevorzugter Komprimierung der Wände (21, 22) des unteren Kastens (12) nur auf einer Seite des unteren Kastens (12) vorgesehen sind.

7. Luftleiter nach einem der Ansprüche 1 bis 5, **dadurch gekennzeichnet, dass** die Einrichtungen (20) für einen Axial- und Queranschlag und die lokale Struktur (21, 22, 23) kontrollierter bevorzugter Komprimierung der Wände (21, 22) des unteren Kastens (12) auf beiden Seiten des unteren Kastens (12) vorgesehen sind.

8. Fahrzeug, das ein Fahrgestell und einen Motorraum enthält, in dem sich ein senkrechter Kühler (5, 6) befindet, der am Fahrzeug-Fahrgestell befestigt ist, vor dem ein Luftleiter (10) angeordnet ist, der dazu bestimmt ist, die Luft von einem vor einem Fahrzeugmotorraum angeordneten Gitter zum Kühler (5, 6) zu sammeln, **dadurch gekennzeichnet, dass** der Luftleiter (10) einem der Ansprüche 1 bis 7 entspricht.

9. Fahrzeug nach Anspruch 8, **dadurch gekennzeichnet, dass** der Flachstift (20) des Luftleiters (10) sich bei der Montage zumindest teilweise außerhalb der mit dem Fahrgestell des Fahrzeugs verbundenen senkrechten Queröffnung (28) befindet.

## Claims

1. Air guide (10) which is intended to collect the air from a grille which is located at the front of a vehicle engine compartment to a vertical radiator (5, 6) which is located in the engine compartment and which is fixed to a vehicle chassis, the air guide (10) being in the form of a main casing which comprises an upper casing (11) and a lower casing (12) which each comprise an opening (13) toward the front which is intended to receive the air, the main casing comprising means (17) for fixing to the vertical radiator (5, 6), the lower casing (12) comprising at least one substantially horizontal lower wall (21) and two substantially vertical lateral walls (22), **characterized in that** the lower casing (12) comprises means (20) for axial and transverse abutment of the rear portion of the lower casing (12) of the air guide relative to the chassis of the vehicle, at least in a lateral region of the lower casing (12) and, on the other hand, a local structure (21, 22, 23) for controlled preferred compression of the walls (21, 22) of the lower casing (12), at least in a lower portion of the lateral region of the lower casing (12).

2. Air guide (10) according to Claim 1, **characterized in that**, in order to produce the axial and transverse abutment means of the rear portion of the lower casing of the air guide relative to the chassis of the vehicle, the lower casing laterally comprises at the rear a longitudinal indexing and anchoring pin (20) which is capable of engaging in a transverse vertical opening (28) which is formed in a component (29) which is fixedly joined to the chassis of the vehicle.

3. Air guide (10) according to either Claim 1 or Claim 2, **characterized in that** the local structure for controlled preferred compression of the walls of the lower casing (12) is produced by the fact that at least a portion of at least one of the lower walls (21) and/or lateral walls (22) of the lower casing (12) comprises a structure (21, 22, 23) for telescopic crushing of the walls under a longitudinal pushing action which exceeds a specific threshold.

4. Air guide (10) according to Claim 3, **characterized in that** the wall (21, 22) of the lower casing (12), in the zones involved in the crushable structure, is formed by a plurality of sections of relatively rigid wall (22a, 22b, 22c) which are offset transversely and connected by walls (30) which are relatively flexible or fragile, which enables the relatively rigid wall sections (22a, 22b, 22c) to move longitudinally relative to each other in order to fit together, by means of deformation or breakage of the connection walls (30).

5. Air guide according to Claim 4, **characterized in that** the connection walls (30) are thinned walls which form a right angle or an acute angle relative to the main wall of the different sections (22a, 22b, 22c).

6. Air guide according to one of Claims 1 to 5, **characterized in that** the means (20) for axial and transverse abutment and the local structure (21, 22, 23) for controlled preferred compression of the walls (21, 22) of the lower casing (12) are provided only at one side of the lower casing (12).

7. Air guide according to one of Claims 1 to 5, **characterized in that** the means (20) for axial and transverse abutment and the local structure (21, 22, 23) for controlled preferred compression of the walls (21, 22) of the lower casing (12) are provided at two sides of the lower casing (12).

8. Vehicle which comprises a chassis and an engine compartment in which there is located a vertical radiator (5, 6) which is fixed to the vehicle chassis, at the front of which there is placed an air guide (10) which is intended to collect the air from a grille which is located at the front of a vehicle engine compartment to the radiator (5, 6), **characterized in that** the air guide (10) is in accordance with one of Claims 1 to 7.

9. Vehicle according to Claim 8, **characterized in that** the pin (20) of the air guide (10) is, during assembly, located at least partially outside the vertical transverse opening (28) which is connected to the chassis of the vehicle.
